# EUROPEAN PATENT APPLICATION

(11) **EP 4 614 620 A1**
(43) Date of publication of application: **10.09.2025**
(21) Application number: 23885611.6
(22) Date of filing: 25.10.2023
(51) Int. Cl.: H01M 4/60, H01M 4/136, H01M 4/137, H01M 4/1397, H01M 4/1399, H01M 4/38, H01M 10/052, H01M 10/058

(54) **SULFUR-CONTAINING MATERIAL FOR POSITIVE ELECTRODE ACTIVE MATERIALS, LITHIUM ION SECONDARY BATTERY, METHOD FOR CHARGING AND DISCHARGING LITHIUM ION SECONDARY BATTERY, AND COMPOSITION FOR FORMING POSITIVE ELECTRODE ACTIVE MATERIAL LAYER**

(30) Priority: 02.11.2022 JP 2022176054
(71) Applicant: ADEKA CORPORATION, Arakawa-ku Tokyo 116-8554 (JP)
(72) Inventor: KAKIAGE, Kenji, Tokyo 116-8554 (JP); YANO, Toru, Tokyo 116-8554 (JP)
(74) Representative: Müller-Boré & Partner Patentanwälte PartG mbB
(86) International application number: PCT/JP2023/038473
(87) International publication number: WO 2024/095854

(57) **Abstract**

Provided is a sulfur-containing material for positive electrode active materials of a lithium ion secondary battery, the sulfur-containing material for positive electrode active materials including a sulfur-modified compound. The sulfur-containing material for positive electrode active materials is used such that a discharge end potential of a positive electrode in a charge and discharge cycle of the lithium ion secondary battery is less than 1.0 V(Li⁺/Li).

## Description

### Technical Field

This disclosure relates to a sulfur-containing material for positive electrode active materials, a lithium ion secondary battery, a method of charging and discharging a lithium ion secondary battery, and a composition for forming a positive electrode active material layer.

### Background Art

A lithium ion secondary battery is used for various applications. The characteristics of the lithium ion secondary battery depend on an electrode, a separator, an electrolyte, and the like serving as constituent members of the battery, and research and development have been actively made on the respective constituent members. In the electrode, an active material in a positive electrode active material layer is important as well as a binder, a current collector material, and the like, and research and development have been actively made on the active material. For example, a sulfur-modified polyacrylonitrile-based compound is known as the active material (see, for example, Patent Documents 1 and 2).

### Citation List

### Patent Document

Patent Document 1: JP 2010-153296 A
Patent Document 2: JP 2012-099342 A

### Summary of Invention

### Technical Problem

An active material capable of forming a lithium ion secondary battery having a further increased discharge capacity and an excellent cycle characteristic is required.

This disclosure has been made in view of the above-mentioned problem, and a primary object of this disclosure is to provide: a sulfur-containing material for positive electrode active materials capable of forming a lithium ion secondary battery having a further increased discharge capacity and an excellent cycle characteristic; a lithium ion secondary battery; a method of charging and discharging a lithium ion secondary battery; and a composition for forming a positive electrode active material layer.

In this disclosure, the term "cycle characteristic" refers to a characteristic in which the charge and discharge capacity of a secondary battery is maintained even while charge and discharge are repeatedly performed. Accordingly, a secondary battery having a large degree of reduction in charge and discharge capacity and a low capacity retention rate is poor in cycle characteristic due to repeated charge and discharge. Meanwhile, a secondary battery having a small degree of reduction in charge and discharge capacity and a high capacity retention rate is excellent in cycle characteristic.

### Solution to Problem

The inventors of the present invention have made extensive investigations, and as a result, have found that the above-mentioned problem can be solved by a sulfur-containing material for positive electrode active materials, a lithium ion secondary battery, a method of charging and discharging a lithium ion secondary battery, and a composition for forming a positive electrode active material layer that satisfy predetermined conditions.

That is, this disclosure is directed to a sulfur-containing material for positive electrode active materials of a lithium ion secondary battery, the sulfur-containing material for positive electrode active materials including a sulfur-modified compound, wherein the sulfur-containing material for positive electrode active materials is used such that a discharge end potential of a positive electrode in a charge and discharge cycle of the lithium ion secondary battery is less than 1.0 V (hereinafter sometimes referred to as "V(Li⁺/Li)") based on a lithium redox potential.

In this disclosure, it is preferred that the sulfur-modified compound be a sulfur-modified acrylic compound.

In this disclosure, it is preferred that the sulfur-modified acrylic compound be a sulfur-modified polyacrylonitrile-based compound.

In this disclosure, it is preferred that a total content of sulfur of the sulfur-containing material for positive electrode active materials fall within a range of from 10 mass% to 80 mass%.

In this disclosure, it is preferred that the sulfur-containing material for positive electrode active materials be used such that a charge end potential of the positive electrode in the charge and discharge cycle of the lithium ion secondary battery falls within a range of from 3.1 V(Li⁺/Li) to 5.0 V(Li⁺/Li).

This disclosure is directed to a lithium ion secondary battery including a positive electrode having a positive electrode active material layer, wherein the positive electrode active material layer contains a sulfur-modified compound, and wherein a discharge end potential of the positive electrode in a charge and discharge cycle of the lithium ion secondary battery is less than 1.0 V(Li⁺/Li).

In this disclosure, it is preferred that a charge end potential of the positive electrode in the charge and discharge cycle of the lithium ion secondary battery fall within a range of from 3.1 V(Li⁺/Li) to 5.0 V(Li⁺/Li).

This disclosure is directed to a method of charging and discharging a lithium ion secondary battery including a positive electrode having a positive electrode active material layer, the positive electrode active material layer containing a sulfur-modified compound, the method including a discharge step of performing discharge under conditions where a discharge end potential of the positive electrode in a charge and discharge cycle of the lithium ion secondary battery is less than 1.0 V(Li⁺/Li).

In this disclosure, it is preferred that the method further include a charge step of performing charge under conditions where a charge end potential of the positive electrode in the charge and discharge cycle of the lithium ion secondary battery falls within a range of from 3.1 V(Li⁺/Li) to 5.0 V(Li⁺/Li).

This disclosure is directed to a composition for forming a positive electrode active material layer of a lithium ion secondary battery, the composition including: a sulfur-modified compound; and at least one kind of addition component selected from the group consisting of: a conductive assistant; a binder; and a solvent, wherein the composition is used such that a discharge end potential of a positive electrode in a charge and discharge cycle of the lithium ion secondary battery is less than 1.0 V(Li⁺/Li).

### Advantageous Effects of Invention

According to this disclosure, the sulfur-containing material for positive electrode active materials that is capable of forming a lithium ion secondary battery having a further increased discharge capacity and an excellent cycle characteristic can be provided.

### Description of Embodiments

A sulfur-containing material for positive electrode active materials, a lithium ion secondary battery, a method of charging and discharging a lithium ion secondary battery, and a composition for forming a positive electrode active material layer of this disclosure are described in detail.

### A. Sulfur-containing Material for Positive Electrode Active Materials

First, the sulfur-containing material for positive electrode active materials of this disclosure is described.

The sulfur-containing material for positive electrode active materials of this disclosure includes a sulfur-modified compound, and is characterized by being used such that the discharge end potential of a positive electrode in a charge and discharge cycle of the lithium ion secondary battery is less than 1.0 V(Li⁺/Li).

According to this disclosure, an effect by which the discharge capacity of a lithium ion secondary battery is increased and an effect by which the cycle characteristic of the battery becomes excellent can be achieved.

The use of the sulfur-containing material for positive electrode active materials of this disclosure such that the discharge end potential of a positive electrode is less than 1.0 V(Li⁺/Li) cannot be easily conceived from related-art knowledges of Patent Documents 1 and 2, and the like. This is because, when an organic material is used as a positive electrode active material, the positive electrode active material is generally used such that the discharge end potential of a positive electrode is 1.0 V(Li⁺/Li) or more. A reduction in discharge end potential of a positive electrode causes overdischarging, leading to a reduction in cycle characteristic, and hence it has been conceivable that the discharge capacity cannot be increased while the cycle characteristic is maintained. Accordingly, the sulfur-containing material for positive electrode active materials in this disclosure cannot be easily conceived from the known art even by a person skilled in the art.

Although the reason why such effects can be achieved through use of the sulfur-containing material for positive electrode active materials of this disclosure is not clear, the reason is assumed to be as described below. For example, it is assumed that the contribution of a chemical structure skeleton of the sulfur-modified compound contained in the sulfur-containing material for positive electrode active materials to discharge can simultaneously achieve the effects by which the discharge capacity is increased and the cycle characteristic becomes excellent.

The sulfur-containing material for positive electrode active materials of this disclosure includes a sulfur-modified compound.

Components and the like for the sulfur-containing material for positive electrode active materials of this disclosure are described in detail below.

### 1. Sulfur-modified Compound

For example, a compound having a covalent bond or the like formed from a sulfur atom and an atom derived from an organic compound may be used as the sulfur-modified compound to be used for the sulfur-containing material for positive electrode active materials of this disclosure. As a method of producing such sulfur-modified compound, there is given, for example, a method including heating elemental sulfur and the organic compound.

In the above-mentioned sulfur-modified compound, the sulfur for forming a covalent bond or the like with an atom derived from the organic compound may be formed of one sulfur atom, or may be a plurality of sulfur atoms, such as a disulfide or a trisulfide. When a plurality of sulfur atoms are present, part of the sulfur atoms only need to interact with each other, and for example, when the plurality of sulfur atoms are linear sulfur, the sulfur atom on at least one end may form a stable interaction. Examples of the stable interaction include a covalent bond and an ionic bond.

Examples of the organic compound include an acrylic compound, a polyether compound, a pitch compound, a polynuclear aromatic compound, an aliphatic hydrocarbon compound, and a thienoacene compound.

That is, examples of the sulfur-modified compound include a sulfur-modified acrylic compound, a sulfur-modified polyether compound, a sulfur-modified pitch compound, a sulfur-modified polynuclear aromatic compound, a sulfur-modified aliphatic hydrocarbon compound, a polythienoacene compound, and carbon polysulfide.

In this disclosure, the sulfur-modified compound is preferably selected from the group consisting of: a sulfur-modified acrylic compound; a sulfur-modified polynuclear aromatic compound; and a sulfur-modified polyether compound, and is more preferably a sulfur-modified acrylic compound from the viewpoint that the discharge capacity is further increased.

The content of sulfur in the sulfur-modified compound is not particularly limited, but preferably falls within the range of from 10 mass% to 80 mass%, more preferably falls within the range of from 20 mass% to 80 mass%, still more preferably falls within the range of from 30% mass% to 80 mass%, still more preferably falls within the range of from 35 mass% to 75 mass%, still more preferably falls within the range of from 35 mass% to 70 mass%, still more preferably falls within the range of from 35 mass% to 65 mass%, still more preferably falls within the range of from 45 mass% to 65 mass%, and most preferably falls within the range of from 45 mass% to 60 mass% from the viewpoint that the discharge capacity is further increased.

Herein, the term "sulfur content" may refer to, for example, the total content of sulfur atoms with respect to the total weight of a sulfur-modified compound. The sulfur content in the sulfur-modified compound may be calculated from the results of analysis with a CHNS analyzer capable of analyzing sulfur and oxygen.

In this disclosure, the sulfur-modified compound is preferably incorporated at 70 parts by mass or more into 100 parts by mass of the sulfur-containing material for positive electrode active materials, is more preferably incorporated at 75 parts by mass or more thereinto, is still more preferably incorporated at 80 parts by mass or more thereinto, is still more preferably 90 parts by mass or more thereinto, is still more preferably incorporated at 95 parts by mass or more thereinto, and is most preferably incorporated at 98 parts by mass or more thereinto from the viewpoint that the discharge capacity is increased.

In this disclosure, the content of the sulfur-modified compound may be measured by a known method. The content of the sulfur-modified compound may be measured by, for example, subjecting the sulfur-containing material for positive electrode active materials to thermogravimetric analysis. In the thermogravimetric analysis, the content of the sulfur-modified compound in the sulfur-containing material for positive electrode active materials may be measured by: measuring a thermal weight loss retention rate until a temperature reaches 350°C under such conditions that a heating start temperature is set to 100°C or less, and a temperature increase rate is set to a constant rate of 10°C/min; and determining the content ratio (mass%) of a residual substance.

### (1) Sulfur-modified Acrylic Compound

For example, a compound having a covalent bond or the like formed from a sulfur atom and an atom in an acrylic compound may be used as the sulfur-modified acrylic compound. As a method of producing such sulfur-modified acrylic compound, there is given, for example, a method including heating elemental sulfur and the acrylic compound.

In this disclosure, examples of the sulfur-modified acrylic compound include a sulfur-modified polyacrylonitrile-based compound and other sulfur-modified acrylic compounds. The sulfur-modified acrylic compound is preferably a sulfur-modified polyacrylonitrile-based compound from the viewpoint that the discharge capacity is increased.

The sulfur content when the sulfur-modified compound is a sulfur-modified acrylic compound is not particularly limited, but preferably falls within the range of from 10 mass% to 80 mass%, more preferably falls within the range of from 20 mass% to 80 mass%, still more preferably falls within the range of from 30 mass% to 80 mass%, still more preferably falls within the range of from 35 mass% to 75 mass%, still more preferably falls within the range of from 35 mass% to 70 mass%, still more preferably falls within the range of from 35 mass% to 65 mass%, still more preferably falls within the range of from 45 mass% to 65 mass%, and most preferably falls within the range of from 45 mass% to 60 mass% from the viewpoint that the discharge capacity is further increased.

### (1-1) Sulfur-modified Polyacrylonitrile-based Compound

For example, a compound in which a sulfur atom and an atom in a polyacrylonitrile-based compound are covalently bonded to each other may be used as the sulfur-modified polyacrylonitrile-based compound. As a method of producing such sulfur-modified polyacrylonitrile-based compound, there is given, for example, a method including heating elemental sulfur and the polyacrylonitrile-based compound. In addition, the sulfur-modified polyacrylonitrile-based compound in this disclosure may contain a compound obtained by a method including heating particles obtained by incorporating a hydrocarbon into an outer shell formed of the polyacrylonitrile-based compound, and the elemental sulfur. The hydrocarbon to be incorporated may be a saturated or unsaturated aliphatic hydrocarbon having 3 to 8 carbon atoms.

In this disclosure, the polyacrylonitrile-based compound has only to be a compound containing a constituent unit derived from at least one of acrylonitrile or methacrylonitrile. The polyacrylonitrile-based compound preferably contains at least the constituent unit derived from acrylonitrile from the viewpoint that the discharge capacity is increased.

The content of the constituent units derived from acrylonitrile and methacrylonitrile in 100 parts by mass of the polyacrylonitrile-based compound is preferably 10 parts by mass or more, more preferably 30 parts by mass or more from the viewpoint that the discharge capacity is increased.

When the polyacrylonitrile-based compound contains the constituent unit derived from acrylonitrile, from the viewpoint that the discharge capacity is increased, the content of the constituent unit derived from acrylonitrile in 100 parts by mass of the polyacrylonitrile-based compound is preferably 10 parts by mass or more, more preferably 30 parts by mass or more, still more preferably 50 parts by mass or more, still more preferably 80 parts by mass or more, still more preferably 85 parts by mass or more, still more preferably 90 parts by mass or more, still more preferably 95 parts by mass or more, most preferably 100 parts by mass, that is, it is most preferred that the polyacrylonitrile-based compound be formed only of the constituent unit derived from acrylonitrile.

When the polyacrylonitrile-based compound contains the constituent unit derived from methacrylonitrile, from the viewpoint that the discharge capacity is increased, the content of the constituent unit derived from methacrylonitrile in 100 parts by mass of the polyacrylonitrile-based compound is preferably 10 parts by mass or more, more preferably 30 parts by mass or more, still more preferably 30 parts by mass or more and 95 parts by mass or less, still more preferably 30 parts by mass or more and 90 parts by mass or less, still more preferably 30 parts by mass or more and 85 parts by mass or less, most preferably 30 parts by mass or more and 80 parts by mass or less.

The polyacrylonitrile-based compound may contain a constituent unit derived from another monomer excluding acrylonitrile and methacrylonitrile. Examples of the other monomer include: acrylic monomers, such as a (meth)acrylate, a (meth)acrylic acid ester, (meth)acrylamide, ethylene glycol (meth)acrylate, 1,6-hexanediol (meth)acrylate, neopentyl glycol di(meth)acrylate, and glycerin di(meth)acrylate; and conjugated dienes, such as butadiene and isoprene. Those other monomers may be used in combination thereof.

Herein, the term "(meth)acrylate" refers to any one of "acrylate" and "methacrylate". The term "(meth)acryl" refers to any one of "acryl" and "methacryl".

When the sulfur-containing material for positive electrode active materials of this disclosure includes the sulfur-modified polyacrylonitrile-based compound as the sulfur-modified compound, the Raman spectrum of the sulfur-containing material for positive electrode active materials of this disclosure has only to be a Raman spectrum in which the sulfur-containing material for positive electrode active materials of this disclosure can exhibit desired effects, but the Raman spectrum is preferably a Raman spectrum in which a peak is present within the range of a Raman shift of 1,327 cm⁻¹±10 cm⁻¹ from the viewpoint that the discharge capacity is increased. From the viewpoint that the discharge capacity is increased, in addition to the peak within the range of 1,327 cm⁻¹±10 cm⁻¹ described above, the Raman spectrum of the sulfur-containing material for positive electrode active materials preferably has a peak within at least one range selected from the range of 1,531 cm⁻¹±10 cm⁻¹, the range of 939 cm⁻¹±10 cm⁻¹, the range of 479 cm⁻¹±10 cm⁻¹, the range of 377 cm⁻¹±10 cm⁻¹, and the range of 318 cm⁻¹±10 cm⁻¹, more preferably has peaks within at least two ranges selected from the range of 1,531 cm⁻¹±10 cm⁻¹, the range of 939 cm⁻¹±10 cm⁻¹, the range of 479 cm⁻¹±10 cm⁻¹, the range of 377 cm⁻¹±10 cm⁻¹, and the range of 318 cm⁻¹±10 cm⁻¹, and still more preferably has peaks within all of the range of 1,531 cm⁻¹±10 cm⁻¹, the range of 939 cm⁻¹±10 cm⁻¹, the range of 479 cm⁻¹±10 cm⁻¹, the range of 377 cm⁻¹±10 cm⁻¹, and the range of 318 cm⁻¹±10 cm⁻¹.

From the viewpoint that the discharge capacity is increased, in the Raman spectrum of the sulfur-containing material for positive electrode active materials, a ratio (A1/B1) of a peak intensity A1 within the range of 1,327 cm⁻¹±10 cm⁻¹ (difference between the maximum peak within the range of 1,327 cm⁻¹±10 cm⁻¹ and the minimum peak within the range of from 300 cm⁻¹ to 1,800 cm⁻¹) to a peak intensity B1 within the range of 1,531 cm⁻¹±10 cm⁻¹ (difference between the maximum peak within the range of 1,531 cm⁻¹±10 cm⁻¹ and the minimum peak within the range of from 300 cm⁻¹ to 1,800 cm⁻¹) is preferably from 0.30 to 5.0, more preferably from 0.50 to 4.5, still more preferably from 0.70 to 4.0, most preferably from 0.80 to 3.5.

The Raman spectrum described above may be measured with NRS-3100 manufactured by JASCO Corporation (excitation wavelength: λ=532 nm, grating: 600 I/mm, resolution: 1 cm⁻¹, exposure time: 30 seconds, slit width: φ50 µm).

### (1-2) Other Sulfur-modified Acrylic Compound

In this disclosure, the other sulfur-modified acrylic compound is obtained by, for example, a method including heating elemental sulfur and a homopolymer or copolymer of any other acrylic monomer free of a constituent unit derived from acrylonitrile or methacrylonitrile. As the other acrylic monomer, the same monomer as that described as the other acrylic monomer in the section "(1-1) Sulfur-modified Polyacrylonitrile-based Compound" may be used.

### (2) Sulfur-modified Polynuclear Aromatic Compound

For example, a compound in which a sulfur atom and an atom in a polynuclear aromatic compound are covalently bonded to each other may be used as the sulfur-modified polynuclear aromatic compound. The sulfur-modified polynuclear aromatic compound may be manufactured by, for example, heating a mixture of elemental sulfur and a polynuclear aromatic compound serving as an organic compound.

Examples of the polynuclear aromatic compound include: a benzene-based aromatic compound, such as naphthalene, anthracene, tetracene, pentacene, phenanthrene, chrysene, picene, pyrene, benzopyrene, perylene, or coronene; an aromatic compound in which part of the benzene-based aromatic compound is a five-membered ring; and a heteroatom-containing heteroaromatic compound in which part of carbon atoms of the aromatic compound are each substituted with sulfur, oxygen, or nitrogen. Further, those polynuclear aromatic compounds may each have a substituent, such as a chain or branched alkyl group having 1 or more and 12 or less carbon atoms, an alkoxyl group, a hydroxyl group, a carboxyl group, an amino group, an aminocarbonyl group, an aminothio group, a mercaptothiocarbonylamino group, or a carboxyalkylcarbonyl group.

The sulfur content when the sulfur-modified compound is a sulfur-modified polynuclear aromatic compound is not particularly limited, but preferably falls within the range of from 30 mass% to 80 mass%, more preferably falls within the range of from 40 mass% to 75 mass%, and most preferably falls within the range of from 45 mass% to 70 mass% from the viewpoint that the discharge capacity is further increased.

### (3) Sulfur-modified Polyether Compound

The same compound as that described in JP 2022-65974 A may be used as the sulfur-modified polyether compound.

### 2. Total Content of Sulfur

The term "total content of sulfur" in this disclosure refers to the total content of sulfur atoms in the sulfur-containing material for positive electrode active materials. The total content of sulfur in the sulfur-containing material for positive electrode active materials may be calculated from the results of analysis with a CHNS analyzer capable of analyzing sulfur and oxygen.

The total content of sulfur in the sulfur-containing material for positive electrode active materials of this disclosure preferably falls within the range of from 10 mass% to 80 mass%, more preferably falls within the range of from 20 mass% to 80 mass%, still more preferably falls within the range of from 30 mass% to 80 mass%, still more preferably falls within the range of from 35 mass% to 75 mass%, still more preferably falls within the range of from 35 mass% to 70 mass%, still more preferably falls within the range of from 35 mass% to 65 mass%, still more preferably falls within the range of from 45 mass% to 65 mass%, and most preferably falls within the range of from 45 mass% to 60 mass% from the viewpoint that the discharge capacity is further increased.

### 3. Discharge End Potential of Positive Electrode

In this disclosure, the term "discharge end potential of a positive electrode" refers to the potential of the positive electrode at which discharge ends in a charge and discharge cycle of a lithium ion secondary battery.

In this disclosure, the sulfur-containing material for positive electrode active materials is used such that the discharge end potential of a positive electrode is less than 1.0 V(Li⁺/Li), but the material is used such that the discharge end potential preferably falls within the range of from 0.05 V(Li⁺/Li) to 0.9 V(Li⁺/Li), more preferably falls within the range of from 0.05 V(Li⁺/Li) to 0.6 V(Li⁺/Li), and most preferably falls within the range of from 0.05 V(Li⁺/Li) to 0.3 V(Li⁺/Li) from the viewpoints of increasing the discharge capacity and achieving an excellent cycle characteristic.

### 4. Charge End Potential of Positive Electrode

In this disclosure, the term "charge end potential of a positive electrode" refers to the potential of the positive electrode at which charge ends in a charge and discharge cycle of a lithium ion secondary battery.

In this disclosure, the sulfur-containing material for positive electrode active materials is used such that the charge end potential of a positive electrode preferably falls within the range of from 3.1 V(Li⁺/Li) to 5.0 V(Li⁺/Li), more preferably falls within the range of from 3.5 V(Li⁺/Li) to 5.0 V(Li⁺/Li), still more preferably falls within the range of from 4.0 V(Li⁺/Li) to 5.0 V(Li⁺/Li), and most preferably falls within the range of from 4.0 V(Li⁺/Li) to 4.5 V(Li⁺/Li) from the viewpoints of increasing the discharge capacity and achieving an excellent cycle characteristic.

### 5. Other Component

The sulfur-containing material for positive electrode active materials of this disclosure includes the sulfur-modified compound, but may include any other component as required.

Examples of the other component include elemental sulfur and impurities.

In this disclosure, the term "elemental sulfur" may refer to sulfur that does not form a stable interaction with the sulfur-modified compound. Examples of the stable interaction include a covalent bond and an ionic bond. Specific examples of the elemental sulfur include, but not particularly limited to, α-sulfur, β-sulfur, and γ-sulfur each having a S₈ structure.

### 6. Application

The sulfur-containing material for positive electrode active materials of this disclosure is used as a positive electrode active material of a lithium ion secondary battery.

In this disclosure, the term "positive electrode active material" refers to an active material contained in a positive electrode active material layer for forming a lithium ion secondary battery.

The same positive electrode active material layer and lithium ion secondary battery as those described in the section "B. Lithium Ion Secondary Battery" described below may be used as the positive electrode active material layer and the lithium ion secondary battery, and hence descriptions thereof in this section are omitted.

### B. Lithium Ion Secondary Battery

Next, a lithium ion secondary battery of this disclosure is described.

The lithium ion secondary battery of this disclosure includes a positive electrode having a positive electrode active material layer, and is characterized in that the positive electrode active material layer contains a sulfur-modified compound, and the discharge end potential of the positive electrode in a charge and discharge cycle of the lithium ion secondary battery is less than 1.0 V(Li⁺/Li).

According to this disclosure, effects by which the discharge capacity of the lithium ion secondary battery is increased and the cycle characteristic of the battery becomes excellent can be achieved.

Configurations of the lithium ion secondary battery of this disclosure are described in detail below. The lithium ion secondary battery of this disclosure encompasses a lithium sulfur secondary battery.

### 1. Positive Electrode

In this disclosure, the term "positive electrode" refers to a positive electrode having a positive electrode active material layer. In this disclosure, the term "positive electrode active material layer" refers to an electrode layer of a positive electrode.

### (1) Positive Electrode Active Material Layer

In this disclosure, the positive electrode active material layer contains a sulfur-modified compound. In this disclosure, the sulfur-modified compound effectively functions as an active material (hereinafter sometimes referred to as "positive electrode active material").

### (1-1) Sulfur-modified Compound

In this disclosure, the same sulfur-modified compound as that described in the section "A. Sulfur-containing Material for Positive Electrode Active Materials" may be used as the sulfur-modified compound contained in the positive electrode active material layer, and hence descriptions thereof in this section are omitted.

The sulfur-modified compound is incorporated, into 100 parts by mass of the positive electrode active material layer, preferably at from 75 parts by mass to 99.5 parts by mass, more preferably at from 80 parts by mass to 99 parts by mass, still more preferably at from 85 parts by mass to 98 parts by mass from the viewpoint that the discharge capacity is increased.

### (1-2) Other Component

The positive electrode active material layer contains the sulfur-modified compound, but may contain any other component as required.

In this disclosure, examples of the other component contained in the positive electrode active material layer include a binder and a conductive assistant. The other component may contain an active material other than the sulfur-modified compound, a viscosity modifier, a reinforcing material, an antioxidant, and the like as required.

A binder known as a binder for a positive electrode active material layer may be used as the binder. Examples of the binder include a styrene-butadiene rubber, a butadiene rubber, polyethylene, polypropylene, polyamide, polyamide imide, polyimide, polyacrylonitrile, polyurethane, polyvinylidene fluoride, polytetrafluoroethylene, an ethylene-propylene-diene rubber, a fluororubber, a styrene-acrylic acid ester copolymer, an ethylene-vinyl alcohol copolymer, an acrylonitrile butadiene rubber, a styrene-isoprene rubber, polymethyl methacrylate, polyacrylate, polyvinyl alcohol, polyvinyl ether, carboxymethyl cellulose, sodium carboxymethyl cellulose, methyl cellulose, a cellulose nanofiber, polyethylene oxide, starch, polyvinylpyrrolidone, polyvinyl chloride, and polyacrylic acid. The binders may be used alone or in combination thereof. Of those, an aqueous binder is preferred, and a styrene-butadiene rubber, sodium carboxymethyl cellulose, and polyacrylic acid are each more preferred from the viewpoints of its low environmental load and excellent binding property.

The content of the binder in the positive electrode active material layer is preferably from 1 part by mass to 30 parts by mass, more preferably from 1 part by mass to 20 parts by mass with respect to 100 parts by mass of the sulfur-modified compound in the positive electrode active material layer from the viewpoint that the discharge capacity is further increased.

A conductive assistant known as a conductive assistant for a positive electrode active material layer may be used as the conductive assistant. Examples of the conductive assistant include: carbon materials, such as natural graphite, artificial graphite, carbon black, ketjen black, acetylene black, channel black, furnace black, lamp black, thermal black, a carbon nanotube, a vapor grown carbon fiber (VGCF), graphene, fullerene, and needle coke; metal powders, such as aluminum powder, nickel powder, and titanium powder; conductive metal oxides, such as zinc oxide and titanium oxide; and sulfides, such as La₂S₃, Sm₂S₃, Ce₂S₃, and TiS₂. The conductive assistants may be used alone or in combination thereof.

The average particle diameter of the conductive assistant is preferably from 0.0001 µm to 100 µm, more preferably from 0.01 µm to 50 µm from the viewpoint that the discharge capacity is increased. In this disclosure, the "average particle diameter" refers to a 50% particle diameter measured by a laser diffraction light scattering method. In the laser diffraction light scattering method, the particle diameter is a diameter on a volume basis, and a secondary particle diameter of a measurement object is measured. When the average particle diameter is measured by the laser diffraction light scattering method, the measurement object is dispersed in a dispersing medium such as water and then subjected to the measurement.

The content of the conductive assistant in the positive electrode active material layer is preferably from 0.05 part by mass to 20 parts by mass, more preferably from 0.1 part by mass to 10 parts by mass, still more preferably from 0.5 part by mass to 8.0 parts by mass with respect to 100 parts by mass of the sulfur-modified compound in the positive electrode active material layer from the viewpoint that the discharge capacity is increased.

Examples of the above-mentioned active material other than the sulfur-modified compound (hereinafter sometimes referred to as "other active material") include materials known as active materials, such as a lithium transition metal-complex oxide, a lithium-containing transition metal phosphoric acid compound, and a lithium-containing silicate compound.

A viscosity modifier known as a viscosity modifier for a positive electrode active material layer may be used as the viscosity modifier. Examples of the viscosity modifier include: a cellulose-based polymer, such as carboxymethyl cellulose, methyl cellulose, or hydroxypropyl cellulose, and an ammonium salt and alkali metal salt thereof; (modified) poly(meth)acrylic acid, and an ammonium salt and alkali metal salt thereof; polyvinyl alcohols, such as (modified) polyvinyl alcohol, a copolymer of acrylic acid or an acrylic acid salt and vinyl alcohol, and a copolymer of maleic anhydride or maleic acid or fumaric acid and vinyl alcohol; polyethylene glycol; polyethylene oxide; polyvinylpyrrolidone; modified polyacrylic acid; oxidized starch; phosphorylated starch; casein; various modified starches; and a hydrogenated acrylonitrile-butadiene copolymer.

A reinforcing material known as a reinforcing material for a positive electrode active material layer may be used as the reinforcing material. Examples of the reinforcing material include various inorganic and organic fillers each having a spherical, plate-like, rod-like, or fibrous shape.

An antioxidant known as an antioxidant for a positive electrode active material layer may be used as the antioxidant. Examples of the antioxidant include a phenol compound, a hydroquinone compound, an organic phosphorus compound, a sulfur compound, a phenylenediamine compound, and a polymer-type phenol compound.

### (1-3) Method of forming Positive Electrode Active Material Layer

A method of forming the positive electrode active material layer has only to be a method capable of forming the positive electrode active material layer, and an example thereof is a method including applying a composition for forming a positive electrode active material layer containing the sulfur-modified compound, any other component to be incorporated as required, and a solvent, and then removing the solvent from the coating film by drying. The thickness of the positive electrode active material layer may be generally from 1 µm to 1,000 µm.

Examples of the solvent include propylene carbonate, ethylene carbonate, diethyl carbonate, dimethyl carbonate, ethylmethyl carbonate, 1,2-dimethoxyethane, 1,2-diethoxyethane, acetonitrile, propionitrile, tetrahydrofuran, 2-methyltetrahydrofuran, dioxane, 1,3-dioxolane, nitromethane, N-methylpyrrolidone, N,N-dimethylformamide, dimethylacetamide, methyl ethyl ketone, cyclohexanone, methyl acetate, methyl acrylate, diethyltriamine, N,N-dimethylaminopropylamine, polyethylene oxide, tetrahydrofuran, dimethyl sulfoxide, sulfolane, γ-butyrolactone, water, and an alcohol. The usage amount of the solvent may be adjusted in accordance with an application method. For example, in the case of a doctor blade method, the usage amount of the solvent is preferably from 20 parts by mass to 300 parts by mass, more preferably from 30 parts by mass to 200 parts by mass with respect to 100 parts by mass of the total amount of the sulfur-modified compound, the binder, and the conductive assistant from the viewpoint that the production is easy.

A method of preparing the composition for forming a positive electrode active material layer is not particularly limited, but may be, for example, a method including using an ordinary ball mill, a sand mill, a bead mill, a pigment disperser, a mortar machine, an ultrasonic disperser, a homogenizer, a rotation/revolution mixer, a planetary mixer, FILMIX, DESPA, or JETPASTER.

The application method is not particularly limited, and various methods, such as a die coater method, a comma coater method, a curtain coater method, a spray coater method, a gravure coater method, a flexo coater method, a knife coater method, a doctor blade method, a reverse roll method, a brush coating method, and a dip method, may each be used. Of those, a die coater method, a doctor blade method, a knife coater method, and a comma coater method are preferred from the viewpoint that a satisfactory surface state of the coating film can be achieved in accordance with the physical properties such as viscosity of the composition for forming a positive electrode active material layer and the drying property thereof.

A drying removal method is not particularly limited, and heating, decompression, and a method including a combination thereof may each be used. A heating temperature may be from 40°C to 200°C. A heating furnace, an infrared heating furnace, a vacuum oven, or the like may be used as an apparatus for the heating or the decompression.

The drying volatilizes a volatile component such as the solvent to form the positive electrode active material layer. After that, the positive electrode active material layer may be subjected to press processing as required. As a method for the press processing, there are given, for example, a mold press method and a roll press method.

### (2) Other Configuration

The positive electrode includes the positive electrode active material layer, and may have any other configuration as required. An example of the other configuration is a current collector.

A conductive material, such as titanium, a titanium alloy, aluminum, an aluminum alloy, copper, nickel, stainless steel, nickel-plated steel, or a conductive resin, is used as a material for forming the current collector. The surfaces of those conductive materials may each be coated with carbon. The current collector has a foil shape, a sheet shape, a mesh shape, a porous shape, or the like. Of those options, aluminum is preferred, and aluminum foil is more preferred from the viewpoints of conductivity and cost. When the current collector has a foil shape, its thickness may be generally from 1 µm to 1,000 µm from the viewpoint that the discharge capacity is further increased and the production is easy.

The lithium ion secondary battery of this disclosure may be subjected to predoping treatment including inserting lithium in advance. A lithium predoping method has only to follow a known method, and examples thereof include: an electrolysis doping method in which a half cell is assembled by using metal lithium as a counter electrode, and the electrode is electrochemically doped with lithium; and a diffusion doping method in which metal lithium foil is bonded to an electrode, and then the electrode is left in a liquid electrolyte and doped with lithium through utilization of diffusion of lithium into the electrode.

In this disclosure, the electrode may be subjected to press processing as required. As a method for the press processing, there are given, for example, a mold press method and a roll press method.

The lithium ion secondary battery of this disclosure includes the above-mentioned positive electrode, but may include a negative electrode, an electrolyte, a separator, and the like serving as other configurations.

### 2. Negative Electrode

The above-mentioned negative electrode has a negative electrode active material layer, but may have any other configuration as required.

### (1) Negative Electrode Active Material Layer

In this disclosure, the term "negative electrode active material layer" refers to an electrode layer of a negative electrode. A negative electrode active material layer containing at least a known active material (hereinafter sometimes referred to as "negative electrode active material") may be used as the negative electrode active material layer.

Examples of the negative electrode active material include natural graphite, artificial graphite, non-graphitizable carbon, graphitizable carbon, lithium, a lithium alloy, silicon, a silicon alloy, silicon oxide, tin, a tin alloy, tin oxide, phosphorus, germanium, indium, copper oxide, antimony sulfide, titanium oxide, iron oxide, manganese oxide, cobalt oxide, nickel oxide, lead oxide, ruthenium oxide, tungsten oxide, and zinc oxide, and as well, composite oxides, such as LiVO₂, Li₂VO₄, and Li₄Ti₅O₁₂. The negative electrode active materials may be used alone or in combination thereof.

In this disclosure, the negative electrode active material is more preferably silicon, a silicon alloy, silicon oxide, or lithium, still more preferably lithium from the viewpoint that the discharge capacity is further increased.

The negative electrode active material layer contains the negative electrode active material, and may contain, for example, a binder or a conductive assistant as required.

The same binder and conductive assistant as those described in the section "(1-2) Other Component" of "(1) Positive Electrode Active Material layer" in "B. Lithium Ion Secondary Battery" may be used as the binder and the conductive assistant to be used in the negative electrode active material layer, and hence descriptions thereof in this section are omitted.

### (2) Other Configuration

The negative electrode used in the lithium ion secondary battery of this disclosure has the above-mentioned negative electrode active material layer, but may have any other configuration as required. An example of the other configuration is a current collector. The same current collector as that described in the section "(2) Other Configuration" of "1. Positive Electrode" in "B. Lithium Ion Secondary Battery" may be used as the current collector, and hence descriptions thereof in this section are omitted.

### 3. Electrolyte

The electrolyte is not particularly limited, and a known electrolyte may be used. Examples of the electrolyte include: a liquid electrolyte obtained by dissolving a supporting electrolyte in an organic solvent; a gel polymer electrolyte in which a supporting electrolyte is dissolved in an organic solvent and gelation is performed with a polymer; a polymer electrolyte, which is free of an organic solvent and in which a supporting electrolyte is dispersed in a polymer; and an inorganic solid electrolyte. In addition, the electrolytes may be used in combination thereof. The electrolyte is preferably a liquid electrolyte, a polymer electrolyte, or an inorganic solid electrolyte, more preferably a liquid electrolyte from the viewpoint that the discharge capacity is further increased and the production is easy.

In this disclosure, in the case of the lithium ion secondary battery, a hitherto known lithium salt is used as the supporting electrolyte to be used in each of the liquid electrolyte and the gel polymer electrolyte. Examples of the supporting electrolyte include LiPF₆, LiBF₄, LiAsF₆, LiCF₃SO₃, LiCF₃CO₂, LiN(CF₃SO₂)₂, LiN(C₂F₅SO₂)₂, LiN(SO₂F)₂, LiC(CF₃SO₂)₃, LiB(CF₃SO₃)₄, LiB(C₂O₄)₂, LiBF₂(C₂O₄), LiSbF₆, LiSiFs, LiSCN, LiClO₄, LiCl, LiF, LiBr, Lil, LiAlF₄, LiAlCl₄, LiPO₂F₂, and derivatives thereof. Of those, one or more kinds selected from the group consisting of: LiPF₆; LiBF₄; LiClO₄; LiAsFs; LiCF₃SO₃; LiN(CF₃SO₂)₂; LiN(C₂F₅SO₂)₂; LiN(SO₂F)₂; and LiC(CF₃SO₂)₃, and derivatives of LiCF₃SO₃ and derivatives of LiC(CF₃SO₂)₃ are preferably used from the viewpoint that the discharge capacity is further increased.

The content of the supporting electrolyte in the liquid electrolyte or the gel polymer electrolyte is preferably from 0.3 mol/L to 7 mol/L, more preferably from 0.8 mol/L to 1.8 mol/L from the viewpoint that the discharge capacity is further increased.

Examples of the supporting electrolyte to be used in the polymer electrolyte in the case of the lithium ion secondary battery include LiN(CF₃SO₂)₂, LiN(C₂F₅SO₂)₂, LiN(SO₂F)₂, LiC(CF₃SO₂)₃, LiB(CF₃SO₃)₄, and LiB(C₂O₄)₂.

In this disclosure, examples of the inorganic solid electrolyte in the case of the lithium ion secondary battery include: phosphoric acid-based materials, such as Li₁₊ₓAₓB₂₋ₓ(PO₄)₃ (A=Al, Ge, Sn, Hf, Zr, Sc, or Y, B=Ti, Ge, or Zn, 0<x<0.5), LiMPO₄ (M=Mn, Fe, Co, or Ni), and Li₃PO₄; composite oxides of lithium, such as Li₃XO₄ (X=As or V), Li₃₊ₓAₓB₁₋ₓO₄ (A=Si, Ge, or Ti, B=P, As, or V, 0<x<0.6), Li₄₊ₓAₓSi₁₋ₓO₄ (when A=B, Al, Ga, Cr, or Fe, 0<x<0.4; when A=Ni or Co, 0<x<0.1), Li_{4-3y}Al_{y}SiO₄ (0<y<0.06), Li_{4-2y}Zn_{y}GeO₄ (0<y<0.25), LiAlO₂, Li₂BO₄, Li₄XO₄ (X=Si, Ge, or Ti), and lithium titanate (LiTiO₂, LiTi₂O₄, Li₄TiO₄, Li₂TiO₃, Li₂Ti₃O₇, or Li₄Ti₅O₁₂); compounds each containing lithium and a halogen, such as LiBr, LiF, LiCl, LiPF₆, and LiBF₄; compounds each containing lithium and nitrogen, such as LiPON, LiN(SO₂CF₃)₂, LiN(SO₂C₂F₅)₂, Li₃N, and LiN(SO₂C₃F₇)₂; crystals each having a perovskite structure having lithium ion conductivity, such as La_{0.55}Li_{0.35}TiO₃, crystals each having a garnet-type structure, such as Li₇-La₃Zr₂O₁₃; glasses, such as 50Li₄SiO₄·50Li₃BO₃₃ and 90Li₃BO₃·10Li₂SO₄; lithium-phosphorus sulfide-based crystals, such as 70Li₂S·30P₂S₅, 75Li₂S·25P₂S₅, Li₆PS₅Cl, Li_{9.54}Si_{1.74}P_{1.44}S_{11.7}Cl_{0.3}, Li₆PS₅P_{1.44}Cl₃, Li₁₀GeP₂S₁₂, and Li_{3.25}Ge_{0.25}P_{0.75}S₄; lithium-phosphorus sulfide-based glasses, such as 30Li₂S·26B₂S₃·44LiI, 50Li₂S·17P₂S₅·33LiBH, 50Li₂S·50GeS₂, 63Li₂S·36SiS₂·1Li₃PO₄, 57Li₂S·38SiS₂·5Li₄SiO₄, and 70Li₂S·50GeS₂; and glass ceramics, such as Li₇P₃S₁₁, Li_{3.25}P_{0.95}S₄, Li₁₀GeP₂S₁₂, Li_{9.6}P₃S₁₂, and Li_{9.54}Si_{1.74}P_{1.44}S_{11.7}Cl_{0.3}. The inorganic solid electrolyte may be coated with the gel polymer electrolyte. In addition, when the inorganic solid electrolyte is used, a layer of the gel polymer electrolyte may be arranged between a layer of the inorganic solid electrolyte and an electrode.

In this disclosure, an organic solvent generally used for a liquid electrolyte may be used as the organic solvent to be used for each of the liquid electrolyte and the gel polymer electrolyte. Specific examples of the organic solvent include a saturated cyclic carbonate compound, a saturated cyclic ester compound, a sulfoxide compound, a sulfone compound, an amide compound, a saturated chain carbonate compound, a chain ether compound, a cyclic ether compound, and a saturated chain ester compound. Of those, a saturated cyclic carbonate compound, a saturated cyclic ester compound, a sulfoxide compound, a sulfone compound, and an amide compound are preferred, and a saturated cyclic carbonate compound is more preferred from the viewpoint that each of the compounds plays a role in increasing the dielectric constant of the electrolyte by virtue of its high specific dielectric constant, and the discharge capacity is further increased. **In** addition, of those, a saturated chain carbonate compound, a chain ether compound, a cyclic ether compound, and a saturated chain ester compound are preferred, and a saturated chain carbonate compound is more preferred from the viewpoint that each of the compounds can reduce the viscosity of the electrolyte and can increase the mobility of an electrolyte ion to make battery characteristics such as an output density excellent.

Examples of the saturated cyclic carbonate compound include ethylene carbonate, fluoroethylene carbonate, 1,2-propylene carbonate, 1,3-propylene carbonate, 1,2-butylene carbonate, 1,3-butylene carbonate, and 1,1-dimethylethylene carbonate.

Examples of the saturated cyclic ester compound include γ-butyrolactone, γ-valerolactone, γ-caprolactone, δ-hexanolactone, and δ-octanolactone.

Examples of the sulfoxide compound include dimethyl sulfoxide, diethyl sulfoxide, dipropyl sulfoxide, diphenyl sulfoxide, and thiophene.

Examples of the sulfone compound include dimethylsulfone, diethylsulfone, dipropylsulfone, diphenylsulfone, sulfolane (also called tetramethylene sulfone), 3-methylsulfolane, 3,4-dimethylsulfolane, 3,4-diphenymethylsulfolane, sulfolene, 3-methylsulfolene, 3-ethylsulfolene, and 3-bromomethylsulfolene. Of those, sulfolane and tetramethylsulfolane are preferred from the viewpoint that the discharge capacity is further increased.

Examples of the amide compound include N-methylpyrrolidone, dimethylformamide, and dimethylacetamide.

Examples of the saturated chain carbonate compound include dimethyl carbonate, ethyl methyl carbonate, diethyl carbonate, ethyl butyl carbonate, methyl-t-butyl carbonate, diisopropyl carbonate, and t-butyl propyl carbonate.

Examples of the chain ether compound and the cyclic ether compound include dimethoxyethane, ethoxymethoxyethane, diethoxyethane, tetrahydrofuran, dioxolane, dioxane, 1,2-bis(methoxycarbonyloxy)ethane, 1,2-bis(ethoxycarbonyloxy)ethane, 1,2-bis(ethoxycarbonyloxy)propane, ethylene glycol bis(trifluoroethyl) ether, propylene glycol bis(trifluoroethyl) ether, ethylene glycol bis(trifluoromethyl) ether, diethylene glycol bis(trifluoroethyl) ether, 1,1,2,2-tetrafluoroethyl 2,2,2-trifluoroethyl ether, 1,1,2,2-tetrafluoroethyl 2,2,3,3-tetrafluoropropyl ether, bis(2,2,2-trifluoroethyl)ether, and glymes. Of those, dioxolane is preferred from the viewpoint that the discharge capacity is further increased.

Examples of the saturated chain ester compound include a monoester compound and a diester compound each having a total of 2 to 8 carbon atoms in a molecule thereof. Specific examples of the saturated chain ester compound include methyl formate, ethyl formate, methyl acetate, ethyl acetate, propyl acetate, isobutyl acetate, butyl acetate, methyl propionate, ethyl propionate, methyl butyrate, methyl isobutyrate, methyl trimethylacetate, ethyl trimethylacetate, methyl malonate, ethyl malonate, methyl succinate, ethyl succinate, methyl 3-methoxypropionate, ethyl 3-methoxypropionate, ethylene glycol diacetyl, and propylene glycol diacetyl. Of those, methyl formate, ethyl formate, methyl acetate, ethyl acetate, propyl acetate, isobutyl acetate, butyl acetate, methyl propionate, and ethyl propionate are preferred from the viewpoint that the discharge capacity is further increased.

Examples of the other organic solvent that may be used in the preparation of the electrolyte include acetonitrile, propionitrile, nitromethane, derivatives thereof, and various ionic liquids.

Examples of the polymer to be used in the gel polymer electrolyte include polyethylene oxide, polypropylene oxide, polyvinyl chloride, polyacrylonitrile, polymethyl methacrylate, polyethylene, polyvinylidene fluoride, and polyhexafluoropropylene. The blending ratio of the polymer in the gel polymer electrolyte and a gelation method are not particularly limited, and a known blending ratio and a known gelation method in the art have only to be adopted.

Examples of the polymer to be used in the polymer electrolyte include polyethylene oxide, polypropylene oxide, and polystyrenesulfonic acid. The blending ratio of the polymer in the polymer electrolyte and a compositing method are not particularly limited, and a known blending ratio and a known compositing method in the art have only to be adopted.

For example, to prolong the lifetime of the battery and improve the safety thereof, the electrolyte may contain any other known additive, such as an electrode film forming agent, an antioxidant, a flame retardant, or an overcharge inhibitor. The content of the other additive is generally from 0.01 part by mass to 10 parts by mass, preferably from 0.1 part by mass to 5 parts by mass with respect to 100 parts by mass of the entirety of the electrolyte from the viewpoint that the discharge capacity is further increased.

When the charge end potential of the positive electrode falls within the range of from 3.1 V(Li⁺/Li) to 3.5 V(Li⁺/Li), the electrolyte is preferably a liquid electrolyte, a gel polymer electrolyte, a polymer electrolyte, or an inorganic solid electrolyte from the viewpoint that the discharge capacity is increased.

As the organic solvent to be used for the liquid electrolyte or the gel polymer electrolyte, a saturated cyclic carbonate compound, a saturated cyclic ester compound, a sulfoxide compound, a sulfone compound, an amide compound, a saturated chain carbonate compound, a chain ether compound, a cyclic ether compound, and a saturated chain ester compound are preferred, and a saturated cyclic carbonate compound, a saturated chain carbonate compound, a chain ether compound, and a cyclic ether compound are more preferred.

As the inorganic solid electrolyte, lithium-phosphorous sulfide-based glass crystals, such as 70Li₂S·30P₂S₅, 75Li₂S·25P₂S₅, Li₆PS₅Cl, Li_{9.54}Si_{1.74}P_{1.44}S_{11.7}Cl_{0.3}, Li₆PS₅P_{1.44}Cl₃, Li₁₀GeP₂S₁₂, and Li_{3.25}Ge_{0.25}P_{0.75}S₄, and lithium-phosphorous sulfide-based glass crystals, such as 30Li₂S·26B₂S₃·44LiI, 50Li₂S·17P₂S₅·33LiBH, 50Li₂S·50GeS₂, 63Li₂S·36SiS₂·1Li₃PO₄, 57Li₂S·38SiS₂·5Li₄SiO₄, and 70Li₂S·50GeS₂, are preferred.

When the charge end potential of the positive electrode falls within the range of from 3.5 V(Li⁺/Li) to 4.5 V(Li⁺/Li), the electrolyte is preferably a liquid electrolyte, a gel polymer electrolyte, a polymer electrolyte, or an inorganic solid electrolyte from the viewpoint that the discharge capacity is increased.

As the organic solvent to be used for the liquid electrolyte or the gel polymer electrolyte, a saturated cyclic carbonate compound, a saturated cyclic ester compound, a sulfoxide compound, a sulfone compound, an amide compound, a saturated chain carbonate compound, a chain ether compound, a cyclic ether compound, and a saturated chain ester compound are preferred, and a saturated cyclic carbonate compound and a saturated chain carbonate compound are more preferred.

When the content of the supporting electrolyte in the liquid electrolyte or the gel polymer electrolyte is 1.5 mol/L or more, a saturated cyclic carbonate compound, a saturated cyclic ester compound, a sulfoxide compound, a sulfone compound, an amide compound, a saturated chain carbonate compound, a chain ether compound, a cyclic ether compound, and a saturated chain ester compound are more preferred, and a saturated cyclic carbonate compound, a saturated chain carbonate compound, a chain ether compound, and a cyclic ether compound are still more preferred.

As the inorganic solid electrolyte, lithium-phosphorous sulfide-based glass crystals, such as 70Li₂S·30P₂S₅, 75Li₂S·25P₂S₅, Li₆PS₅Cl, Li_{9.54}Si_{1.74}P_{1.44}S_{11.7}Cl_{0.3}, Li₆PS₅P_{1.44}Cl₃, Li₁₀GeP₂S₁₂, and Li_{3.25}Ge_{0.25}P_{0.75}S₄, and lithium-phosphorous sulfide-based glass crystals, such as 30Li₂S·26B₂S₃·44LiI, 50Li₂S·17P₂S₅·33LiBH, 50Li₂S·50GeS₂, 63Li₂S·36SiS₂·1Li₃PO₄, 57Li₂S·38SiS₂·5Li₄SiO₄, 70Li₂S·50GeS₂, are preferred.

When the charge end potential of the positive electrode falls within the range of from 4.5 V(Li⁺/Li) to 5.0 V(Li⁺/Li), the electrolyte is preferably a polymer electrolyte or an inorganic solid electrolyte from the viewpoint that the discharge capacity is increased.

As the inorganic solid electrolyte, lithium-phosphorous sulfide-based glass crystals, such as 70Li₂S·30P₂S₅, 75Li₂S·25P₂S₅, Li₆PS₅Cl, Li_{9.54}Si_{1.74}P_{1.44}S_{11.7}Cl_{0.3}, Li₆PS₅P_{1.44}Cl₃, Li₁₀GeP₂S₁₂, and Li_{3.25}Ge_{0.25}P_{0.75}S₄, and lithium-phosphorous sulfide-based glass crystals, such as 30Li₂S·26B₂S₃·44LiI, 50Li₂S·17P₂S₅·33LiBH, 50Li₂S·50GeS₂, 63Li₂S·36SiS₂·1Li₃PO₄, 57Li₂S·38SiS₂·5Li₄SiO₄, and 70Li₂S·50GeS₂, are preferred.

### 4. Separator

The separator is not particularly limited as long as lithium ions are allowed to permeate therethrough and the contact between the positive electrode and the negative electrode can be prevented, but for example, a microporous polymer film or a non-woven fabric may be used. Examples of the film include films formed of polymer compounds containing, as main components, for example, any of polyethylene, polypropylene, polyvinylidene fluoride, polyvinylidene chloride, polyacrylonitrile, polyacrylamide, polytetrafluoroethylene, polysulfone, polyethersulfone, polycarbonate, polyamide, polyimide, polyethers, such as polyethylene oxide and polypropylene oxide, various celluloses, such as carboxymethyl cellulose and hydroxypropyl cellulose, and poly(meth)acrylic acid and various esters thereof, derivatives thereof, and copolymers and mixtures thereof. Those films may each be coated with a ceramic material, such as alumina or silica, magnesium oxide, an aramid resin, or polyvinylidene fluoride.

Those films may be used alone or as a multi-layer film in which the films are laminated on each other. Further, various additives may be used in those films, and the kinds and contents thereof are not particularly limited. Of those films, a film formed of polyethylene, polypropylene, polyvinylidene fluoride, or polysulfone is preferred from the viewpoint that the discharge capacity of the lithium ion secondary battery is further increased.

When the electrolyte is the polymer electrolyte or the inorganic solid electrolyte, the separator may not be incorporated.

### 5. Charge and Discharge Method

In the lithium ion secondary battery of this disclosure, the discharge end potential of the positive electrode is less than 1.0 V(Li⁺/Li).

In this disclosure, a preferred range of the discharge end potential of the positive electrode may be the same as that in the content described in the section "3. Discharge End Potential of Positive Electrode" in "A. Sulfur-containing Material for Positive Electrode Active Materials."

In addition, the charge end potential of the positive electrode of the lithium ion secondary battery of this disclosure may be the same as that in the content described in the section "4. Charge End Potential of Positive Electrode" in "A. Sulfur-containing Material for Positive Electrode Active Materials."

### C. Method of charging and discharging Lithium Ion Secondary Battery

Next, a method of charging and discharging a lithium ion secondary battery of this disclosure is described.

The method of charging and discharging a lithium ion secondary battery of this disclosure is characterized by including a discharge step of performing discharge under conditions where, in a lithium ion secondary battery including a positive electrode having a positive electrode active material layer containing a sulfur-modified compound, the discharge end potential of the positive electrode is less than 1.0 V(Li⁺/Li).

According to this disclosure, effects by which the discharge capacity of the lithium ion secondary battery is increased and the cycle characteristic of the battery becomes excellent can be achieved.

Steps included in the charge and discharge method of this disclosure are described below.

The contents with regard to the positive electrode, the positive electrode active material layer, and the lithium ion secondary battery used in the charge and discharge method of this disclosure may be the same as those described in the section "B. Lithium Ion Secondary Battery," and hence the descriptions thereof in this section are omitted.

### 1. Discharge Step

The discharge step in the charge and discharge method of this disclosure is a step of performing discharge under conditions where the discharge end potential of the positive electrode is less than 1.0 V(Li⁺/Li).

In this step, a preferred range of the discharge end potential of the positive electrode may be the same as that in the content described in the section "3. Discharge End Potential of Positive Electrode" in "A. Sulfur-containing Material for Positive Electrode Active Materials."

### 2. Charge Step

The charge and discharge method of this disclosure generally includes a charge step.

Such charge step has only to be a step of performing charge such that the discharge capacity is further increased and an excellent cycle characteristic is achieved.

The charge end potential of the positive electrode in such charge step may be the same as that in the content described in the section "4. Charge End Potential of Positive Electrode" in "A. Sulfur-containing Material for Positive Electrode Active Materials."

### D. Composition for forming Positive Electrode Active Material Layer

Next, a composition for forming a positive electrode active material layer of this disclosure is described.

The composition for forming a positive electrode active material layer of this disclosure includes a sulfur-modified compound, and at least one kind of addition component selected from the group consisting of: a conductive assistant; a binder; and a solvent, and is used such that the discharge end potential of a positive electrode in a charge and discharge cycle of a lithium ion secondary battery is less than 1.0 V(Li⁺/Li).

According to this disclosure, a lithium ion secondary battery having a large discharge capacity can be formed by using a positive electrode active material layer formed from the above-mentioned composition for forming a positive electrode active material layer.

Components for the composition for forming a positive electrode active material layer of this disclosure are described in detail below.

### 1. Sulfur-modified Compound

In this disclosure, the same sulfur-modified compound as that described in the section "A. Sulfur-containing Material for Positive Electrode Active Materials" may be used as the sulfur-modified compound, and hence descriptions thereof in this section are omitted.

The content of the sulfur-modified compound is not particularly limited as long as a desired positive electrode active material layer can be formed. However, when the composition includes a solvent serving as an addition component, the content of the sulfur-modified compound in 100 parts by mass of the composition for forming a positive electrode active material layer preferably falls within the range of from 10 parts by mass to 80 parts by mass, more preferably falls within the range of from 20 parts by mass to 70 parts by mass, still more preferably falls within the range of from 25 parts by mass to 65 parts by mass, and most preferably falls within the range of from 30 parts by mass to 60 parts by mass from the viewpoints of facilitating the formation of a positive electrode active material layer and increasing the discharge capacity of a lithium ion secondary battery.

The content of the sulfur-modified compound is not particularly limited as long as a desired positive electrode active material layer can be formed, but the content of the sulfur-modified compound in 100 parts by mass of a solid content of the composition for forming a positive electrode active material layer preferably falls within the range of from 50 parts by mass to 99 parts by mass, more preferably falls within the range of from 70 parts by mass to 98 parts by mass, still more preferably falls within the range of from 80 parts by mass to 97 parts by mass, and most preferably falls within the range of 90 parts by mass to 97 parts by mass from the viewpoints of facilitating the formation of a positive electrode active material layer and increasing the discharge capacity of a lithium ion secondary battery. The term "solid content of the composition for forming a positive electrode active material layer" refers to all components other than the solvent of the components contained in the composition for forming a positive electrode active material layer, and generally refers to a component contained in the positive electrode active material layer.

### 2. Addition Component

The addition component in this disclosure is at least one kind selected from the group consisting of: a conductive assistant; a binder; and a solvent. The addition component may contain only one kind selected from a conductive assistant, a binder, and a solvent, or may contain two or more kinds thereof.

In this disclosure, the above-mentioned addition component preferably contains two or more kinds selected from the group consisting of: a conductive assistant; a binder; and a solvent, more preferably contains three kinds selected from the group consisting of: a conductive assistant; a binder; and a solvent, that is, all of a conductive assistant, a binder, and a solvent from the viewpoint of facilitating the formation of a positive electrode active material layer and increasing the discharge capacity of a lithium ion secondary battery.

The contents and contained amounts of the conductive assistant, the binder, and the solvent may be the same as those described in the section "B. Lithium Ion Secondary Battery," and hence the descriptions thereof in this section are omitted.

### 3. Other Component

The composition for forming a positive electrode active material layer of this disclosure includes the sulfur-modified compound and the addition component, but may include any other component as required.

Examples of the other component may include those described as components other than the above-mentioned addition component in the section "(1-2) Other Component" of "(1) Positive Electrode Active Material layer" of "1. Positive Electrode" in "B. Lithium Ion Secondary Battery."

### 4. Others

The composition for forming a positive electrode active material layer of this disclosure is used for the formation of a positive electrode active material layer of a lithium ion secondary battery.

The same positive electrode active material layer and lithium ion secondary battery as those described in the section "B. Lithium Ion Secondary Battery" may be used as the positive electrode active material layer and the lithium ion secondary battery, and hence descriptions thereof in this section are omitted.

The composition for forming a positive electrode active material layer of this disclosure is used such that the discharge end potential of a positive electrode in a charge and discharge cycle of a lithium ion secondary battery including a positive electrode having a positive electrode active material layer formed from the composition for forming a positive electrode active material layer is less than 1.0 V(Li⁺/Li).

Such a preferred range of the discharge end potential of the positive electrode may be the same as that in the content described in the section "3. Discharge End Potential of Positive Electrode" in "A. Sulfur-containing Material for Positive Electrode Active Materials," and hence the descriptions thereof in this section are omitted.

In addition, a preferred range of the charge end potential of the positive electrode in a charge and discharge cycle of a lithium ion secondary battery including a positive electrode having a positive electrode active material layer formed from the composition for forming a positive electrode active material layer may be the same as that in the content described in the section "4. Charge End Potential of Positive Electrode" in "A. Sulfur-containing Material for Positive Electrode Active Materials," and hence the descriptions thereof in this section are omitted.

A method of forming a positive electrode active material layer is not particularly limited as long as the method can provide a lithium secondary battery exhibiting a desired discharge capacity, cycle characteristic, and the like through use of the composition for forming a positive electrode active material layer. The content of the method may be the same as that described in the section "B. Lithium Ion Secondary Battery," and hence the descriptions thereof in this section are omitted.

### E. Others

This disclosure includes the following aspects.
[1] A sulfur-containing material for positive electrode active materials of a lithium ion secondary battery, the sulfur-containing material for positive electrode active materials including a sulfur-modified compound,
   wherein the sulfur-containing material for positive electrode active materials is used such that a discharge end potential of a positive electrode in a charge and discharge cycle of the lithium ion secondary battery is less than 1.0 V(Li⁺/Li).
[2] The sulfur-containing material for positive electrode active materials according to Item [1], wherein the sulfur-modified compound is a sulfur-modified acrylic compound.
[3] The sulfur-containing material for positive electrode active materials according to Item [2], wherein the sulfur-modified acrylic compound is a sulfur-modified polyacrylonitrile-based compound.
[4] The sulfur-containing material for positive electrode active materials according to any one of Items [1] to [3], wherein a total content of sulfur of the sulfur-containing material for positive electrode active materials falls within a range of from 10 mass% to 80 mass%.
[5] The sulfur-containing material for positive electrode active materials according to any one of Items [1] to [4], wherein the sulfur-containing material for positive electrode active materials is used such that a charge end potential of the positive electrode in the charge and discharge cycle of the lithium ion secondary battery falls within a range of from 3.1 V(Li⁺/Li) to 5.0 V(Li⁺/Li).
[6] A lithium ion secondary battery including a positive electrode having a positive electrode active material layer, wherein the positive electrode active material layer contains a sulfur-modified compound, and
   wherein a discharge end potential of the positive electrode in a charge and discharge cycle of the lithium ion secondary battery is less than 1.0 V(Li⁺/Li).
[7] The lithium ion secondary battery according to Item [6], wherein a charge end potential of the positive electrode in the charge and discharge cycle of the lithium ion secondary battery falls within a range of from 3.1 V(Li⁺/Li) to 5.0 V(Li⁺/Li).
[8] A method of charging and discharging a lithium ion secondary battery including a positive electrode having a positive electrode active material layer, the positive electrode active material layer containing a sulfur-modified compound, the method including a discharge step of performing discharge under conditions where a discharge end potential of the positive electrode in a charge and discharge cycle of the lithium ion secondary battery is less than 1.0 V(Li⁺/Li)..
[9] The method of charging and discharging a lithium ion secondary battery according to Item [8], further including a charge step of performing charge under conditions where a charge end potential of the positive electrode in the charge and discharge cycle of the lithium ion secondary battery falls within a range of from 3.1 V(Li⁺/Li) to 5.0 V(Li⁺/Li).
[10] A composition for forming a positive electrode active material layer of a lithium ion secondary battery, the composition including:
   a sulfur-modified compound; and
   at least one kind of addition component selected from the group consisting of: a conductive assistant; a binder; and a solvent,
   wherein the composition is used such that a discharge end potential of a positive electrode in a charge and discharge cycle of the lithium ion secondary battery is less than 1.0 V(Li⁺/Li).

This disclosure is not limited to the above-mentioned embodiments. The above-mentioned embodiments are illustrative, and any embodiment having substantially the same configuration as that of the technical idea described in Claims and exhibiting an action and effect similar thereto is encompassed in the technical scope of this disclosure.

### Examples

This disclosure is described in more detail below by way of Examples and Comparative Examples. However, this disclosure is by no means limited to the following Examples and the like. "Part(s)" and "%" in Examples are by mass unless otherwise specified.

### [Production of Sulfur-containing Material A for Positive Electrode Active Materials]

Only a heating step was performed by a method in conformity with Production Examples of JP 2013-054957 A. Specifically, 20 g of a raw material PAN mixture obtained by mixing 10 parts by mass of polyacrylonitrile powder (manufactured by Sigma-Aldrich, average particle diameter: 200 µm) and 30 parts by mass of elemental sulfur (manufactured by Sigma-Aldrich, average particle diameter: 200 µm) was loaded into a bottomed cylindrical glass tube having an outer diameter of 45 mm and a length of 120 mm, and a silicone plug including a gas introduction tube and a gas discharge tube was then installed in an opening of the glass tube. After air inside the glass tube was replaced with nitrogen, a lower portion of the glass tube was inserted in a crucible-type electric furnace, and was heated at 400°C for 1 hour while hydrogen sulfide to be generated was removed by introducing nitrogen from the gas introduction tube. Thus, a heat-treated product 1 was obtained. Sulfur vapor was refluxed by being condensed in an upper portion or a lid portion of the glass tube.

The resultant heat-treated product 1 was placed in a glass tube oven at 260°C, and was heated at a pressure reduced to 20 hPa for 3.0 hours so that the elemental sulfur was removed therefrom. Thus, a sulfur-modified polyacrylonitrile-based compound A was obtained. In the following, the sulfur-modified polyacrylonitrile-based compound A was used as a sulfur-containing material A for positive electrode active materials.

### [Production of Sulfur-containing Material B for Positive Electrode Active Materials]

A sulfur-modified polyacrylonitrile-based compound B was obtained in the same manner as in the production of the sulfur-containing material A for positive electrode active materials except that the heating temperature at which the heat-treated product 1 was heated was changed from 260°C to 300°C in the production of the sulfur-containing material A for positive electrode active materials. In the following, the sulfur-modified polyacrylonitrile-based compound B was used as a sulfur-containing material B for positive electrode active materials.

### [Total Content of Sulfur]

The total content of sulfur of the sulfur-containing material for positive electrode active materials obtained in the foregoing was calculated from the results of analysis with a CHNS analyzer (manufactured by Elementar Analysensysteme GmbH, model: vario MICRO cube) capable of analyzing sulfur and oxygen. As a result, the total content of sulfur in the sulfur-containing material A for positive electrode active materials was 48.0 mass%, and the total content of sulfur in the sulfur-containing material B for positive electrode active materials was 38.2 mass%. The temperatures of a combustion tube and a reduction tube were set to 1,150°C and 850°C, respectively, and a tin boat was used as a sample container.

### [Evaluation of Battery when Sulfur-containing Material A for Positive Electrode Active Materials was used]

A lithium ion secondary battery was produced through use of the sulfur-containing material A for positive electrode active materials obtained in the foregoing.

### (1) Preparation of Positive Electrode

90.0 Parts by mass of the sulfur-containing material A for positive electrode active materials serving as an active material, 5.0 parts by mass of acetylene black (manufactured by Denka Company Limited) serving as a conductive assistant, 3.0 parts by mass of a styrene-butadiene rubber (aqueous dispersion, manufactured by Zeon Corporation) and 2.0 parts by mass of sodium carboxymethyl cellulose (manufactured by Daicel Fine Chem Daicel Miraizu Ltd.) serving as binders, and 120 parts by mass of water serving as a solvent were mixed with a rotation/revolution mixer to prepare a composition A for forming a positive electrode active material.

When the discharge end potential of a positive electrode was less than 0.3 V, this composition A for forming a positive electrode active material layer was applied onto SUS foil (thickness: 10 µm) by a doctor blade method. When the discharge end potential of the positive electrode fell within the range of from 0.3 V to 1.0 V, this composition A for forming a positive electrode active material layer was applied onto carbon-coated aluminum foil (thickness: 20 µm) by the doctor blade method. The respective compositions A for forming positive electrode active material layers were dried at 90°C for 1 hour. After that, each of the electrodes was cut into a predetermined size and subjected to vacuum drying at 130°C for 2 hours to prepare a disc-shaped positive electrode A.

### (2) Preparation of Negative Electrode

Metal lithium having a thickness of 500 µm was cut into a predetermined size to prepare a disc-shaped negative electrode.

### (3) Preparation of Electrolyte

An electrolyte solution 1 was prepared by dissolving LiPF₆ at a concentration of 1.0 mol/L in a mixed solvent formed of 50 vol% of fluoroethylene carbonate and 50 vol% of diethyl carbonate.

### (4) Production of Battery

The positive electrode A and the negative electrode prepared in advance were held in a case while a glass filter serving as a separator was sandwiched therebetween. After that, the electrolyte solution 1 prepared in advance was injected into the case, and the case was hermetically sealed. Thus, lithium ion secondary batteries (coin-shaped batteries each having a diameter of 20 mm and a thickness of 3.2 mm) were each produced. This production was performed under an atmosphere where the dew-point temperature was -70°C.

### (5) Evaluation Method

Each of the lithium ion secondary batteries produced in the foregoing was placed in a constant-temperature bath at 25°C, and was subjected to 100 cycles of charge and discharge at a charge rate of 0.1C and a discharge rate of 0.1C under the conditions of a charge end potential and a discharge end potential of a positive electrode shown in Table 1. Discharge capacities (mAh/g) were measured in the 10th cycle and the 100th cycle. The results of the discharge capacity (mAh/g) in the 10th cycle are shown in Table 1. In this disclosure, "g" in the discharge capacity (mAh/g) refers to the mass of the active material in the positive electrode active material layer.

In addition, a ratio of the discharge capacity in the 100th cycle to the discharge capacity in the 10th cycle was used as a capacity retention rate (%), and a cycle characteristic was evaluated. The results are shown in Table 1.

**Table 1**

| Evaluation of battery when sulfur-containing material A for positive electrode active materials was used | | | | |
|---|---|---|---|---|
| | Charge end potential of positive electrode | Discharge end potential of positive electrode | Discharge capacity | Capacity retention rate |
| Example 1 | 3.0 V(Li⁺/Li) | 0.6 V(Li⁺/Li) | 825 mAh/g | 92% |
| Example 2 | 4.3 V(Li⁺/Li) | 0.6 V(Li⁺/Li) | 855 mAh/g | 99% |
| Example 3 | 3.0 V(Li⁺/Li) | 0.3 V(Li⁺/Li) | 920 mAh/g | 81% |
| Example 4 | 4.3 V(Li⁺/Li) | 0.3 V(Li⁺/Li) | 960 mAh/g | 96% |
| Example 5 | 3.5 V(Li⁺/Li) | 0.3 V(Li⁺/Li) | 900 mAh/g | 96% |
| Example 6 | 4.3 V(Li⁺/Li) | 0.1 V(Li⁺/Li) | 1,020 mAh/g | 90% |
| Comparative Example 1 | 3.0 V(Li⁺/Li) | 1.0 V(Li⁺/Li) | 685 mAh/g | 99% |
| Comparative Example 2 | 4.3 V(Li⁺/Li) | 1.0 V(Li⁺/Li) | 695 mAh/g | 85% |
| Comparative Example 3 | 3.5 V(Li⁺/Li) | 1.0 V(Li⁺/Li) | 690 mAh/g | 100% |

### [Evaluation of Battery when Sulfur-containing Material B for Positive Electrode Active Materials was used]

A lithium ion secondary battery was produced through use of the sulfur-containing material B for positive electrode active materials obtained in the foregoing.

### (1) Preparation of Positive Electrode

90.0 Parts by mass of the sulfur-containing material B for positive electrode active materials serving as an active material, 5.0 parts by mass of acetylene black (manufactured by Denka Company Limited) serving as a conductive assistant, 3.0 parts by mass of a styrene-butadiene rubber (aqueous dispersion, manufactured by Zeon Corporation) and 2.0 parts by mass of sodium carboxymethyl cellulose (manufactured by Daicel Fine Chem Daicel Miraizu Ltd.) serving as binders, and 120 parts by mass of water serving as a solvent were mixed with a rotation/revolution mixer to prepare a composition B for forming a positive electrode active material layer.

When the discharge end potential of the positive electrode was less than 0.3 V, this composition B for forming a positive electrode active material layer was applied onto SUS foil (thickness: 10 µm) by a doctor blade method. When the discharge end potential of the positive electrode fell within the range of from 0.3 V to 1.0 V, this composition B for forming a positive electrode active material layer was applied onto carbon-coated aluminum foil (thickness: 20 µm) by the doctor blade method. The respective compositions B for forming positive electrode active material layers were dried at 90°C for 1 hour. After that, each of the electrodes was cut into a predetermined size and subjected to vacuum drying at 130°C for 2 hours to prepare a disc-shaped positive electrode B.

### (2) Preparation of Negative Electrode

Metal lithium having a thickness of 500 µm was cut into a predetermined size to prepare a disc-shaped negative electrode.

### (3) Preparation of Electrolyte

An electrolyte solution 2 was prepared by dissolving LiPF₆ at a concentration of 1.0 mol/L in a mixed solvent formed of 50 vol% of ethylene carbonate and 50 vol% of diethyl carbonate.

### (4) Production of Battery

The positive electrode B and the negative electrode prepared in advance were held in a case while a glass filter serving as a separator was sandwiched therebetween. After that, the electrolyte solution 2 prepared in advance was injected into the case, and the case was hermetically sealed. Thus, lithium ion secondary batteries (coin-shaped batteries each having a diameter of 20 mm and a thickness of 3.2 mm) were each produced. This production was performed under an atmosphere where the dew-point temperature was -70°C.

### (5) Evaluation Method

Each of the lithium ion secondary batteries produced in the foregoing was placed in a constant-temperature bath at 25°C, and was subjected to 100 cycles of charge and discharge at a charge rate of 0.1C and a discharge rate of 0.1C under the conditions of a charge end potential and a discharge end potential of a positive electrode shown in Table 2. Discharge capacities (mAh/g) were measured in the 10th cycle and the 100th cycle. The results of the discharge capacity (mAh/g) in the 10th cycle are shown in Table 2. In this disclosure, "g" in the discharge capacity (mAh/g) refers to the mass of the active material in the positive electrode active material layer.

In addition, a ratio of the discharge capacity in the 100th cycle to the discharge capacity in the 10th cycle was used as a capacity retention rate (%), and a cycle characteristic was evaluated. The results are shown in Table 2.

**Table 2**

| Evaluation of battery when sulfur-containing material B for positive electrode active materials was used | | | | |
|---|---|---|---|---|
| | Charge end potential of positive electrode | Discharge end potential of positive electrode | Discharge capacity | Capacity retention rate |
| Example 7 | 3.0 V(Li⁺/Li) | 0.3 V(Li⁺/Li) | 801 mAh/g | 83% |
| Example 8 | 4.3 V(Li⁺/Li) | 0.3 V(Li⁺/Li) | 850 mAh/g | 96% |
| Example 9 | 4.3 V(Li⁺/Li) | 0.1 V(Li⁺/Li) | 970 mAh/g | 88% |
| Comparative Example 4 | 3.0 V(Li⁺/Li) | 1.0 V(Li⁺/Li) | 545 mAh/g | 100% |
| Comparative Example 5 | 4.3 V(Li⁺/Li) | 1.0 V(Li⁺/Li) | 572 mAh/g | 88% |

From the above-mentioned results, in the lithium ion secondary battery using the sulfur-containing material for positive electrode active materials of each of Examples, the discharge capacity was increased to 800 mAh/g or more, and the capacity retention rate was 80% or more and was excellent. Accordingly, it was found that both the discharge capacity and the cycle characteristic (capacity retention rate) were excellent.

## Claims

1. A sulfur-containing material for positive electrode active materials of a lithium ion secondary battery, the sulfur-containing material for positive electrode active materials comprising a sulfur-modified compound,
wherein the sulfur-containing material for positive electrode active materials is used such that a discharge end potential of a positive electrode in a charge and discharge cycle of the lithium ion secondary battery is less than 1.0 V(Li⁺/Li).

2. The sulfur-containing material for positive electrode active materials according to claim 1, wherein the sulfur-modified compound is a sulfur-modified acrylic compound.

3. The sulfur-containing material for positive electrode active materials according to claim 2, wherein the sulfur-modified acrylic compound is a sulfur-modified polyacrylonitrile-based compound.

4. The sulfur-containing material for positive electrode active materials according to claim 1, wherein a total content of sulfur of the sulfur-containing material for positive electrode active materials falls within a range of from 10 mass% to 80 mass%.

5. The sulfur-containing material for positive electrode active materials according to any one of claims 1 to 4, wherein the sulfur-containing material for positive electrode active materials is used such that a charge end potential of the positive electrode in the charge and discharge cycle of the lithium ion secondary battery falls within a range of from 3.1 V(Li⁺/Li) to 5.0 V(Li⁺/Li).

6. A lithium ion secondary battery including a positive electrode having a positive electrode active material layer, wherein the positive electrode active material layer contains a sulfur-modified compound, and
wherein a discharge end potential of the positive electrode in a charge and discharge cycle of the lithium ion secondary battery is less than 1.0 V(Li⁺/Li).

7. The lithium ion secondary battery according to claim 6, wherein a charge end potential of the positive electrode in the charge and discharge cycle of the lithium ion secondary battery falls within a range of from 3.1 V(Li⁺/Li) to 5.0 V(Li⁺/Li).

8. A method of charging and discharging a lithium ion secondary battery including a positive electrode having a positive electrode active material layer, the positive electrode active material layer containing a sulfur-modified compound, the method comprising a discharge step of performing discharge under conditions where a discharge end potential of the positive electrode in a charge and discharge cycle of the lithium ion secondary battery is less than 1.0 V(Li⁺/Li).

9. The method of charging and discharging a lithium ion secondary battery according to claim 8, further comprising a charge step of performing charge under conditions where a charge end potential of the positive electrode in the charge and discharge cycle of the lithium ion secondary battery falls within a range of from 3.1 V(Li⁺/Li) to 5.0 V(Li⁺/Li).

10. A composition for forming a positive electrode active material layer of a lithium ion secondary battery, the composition comprising:
a sulfur-modified compound; and
at least one kind of addition component selected from the group consisting of: a conductive assistant; a binder; and a solvent,
wherein the composition is used such that a discharge end potential of a positive electrode in a charge and discharge cycle of the lithium ion secondary battery is less than 1.0 V(Li⁺/Li).
